# EUROPÄISCHE PATENTSCHRIFT

(11) **EP 0 803 520 B1**
(45) Veröffentlichungstag und Bekanntmachung des Hinweises auf die Patenterteilung: **16.12.1998**
(21) Anmeldenummer: 97105878.9
(22) Anmeldetag: 10.04.1997
(51) Int. Cl.: C08F 10/00, C08F 4/64, C07C 211/65

(54) **Polymerisationskatalysatoren mit beta-Diketiminat-Liganden**
Polymerization catalysts containing beta-diketiminate-ligands
Catalyseurs de polymérisation contenant des ligands du type bèta-dicétiminate

(30) Priorität: 25.04.1996 DE 19616523
(43) Veröffentlichungstag der Anmeldung: 29.10.1997
(73) Patentinhaber: BASF AKTIENGESELLSCHAFT, 67056 Ludwigshafen (DE)
(72) Erfinder: Kristen, Marc Oliver, Dr., 67117 Limburgerhof (DE); Görtz, Hans-Helmut, Dr., 67251 Freinsheim (DE); Deelman, Berth-Jan, Dr., 4102 XD Culemborg (NL); Lappert, Michael Franz, Prof. Dr., Brighton BN 16WL (GB); Leung, Wing-Por, Prof. Dr., Shatin, New Territories (HK); Lee, Hung-Kay, Dr., Kowloon (HK)

(56) Entgegenhaltungen:
- WO-A-95/33776
- DE-A- 4 218 199
- DE-C- 4 202 889
- JOURNAL OF ORGANO METALLIC CHEMISTRY, Band 500, 1995 M.F. LAPPERT et al. "Recent studies on metal and metalloid bis(trimethylsilyl)- methyls and the transformation of the bis(trimethylsilyl) methyl into the azaallyl and beta-diketinimato ligands" Seiten 203-217
- JOURNAL OF THE CHEMICAL SOCIETY, CHEMICAL COMMUNICA- TIONS, Nr. 17, September 07, 1994 P.B. HITCHCOCK et al. "Transformation of the bis(trimethylsilyl)methyl into into Azaallyl and Beta-Diketinimato Ligands; the X-Ray Structures of (Li(N(R)C(But)CH(R)))2 and (Zr(N(R)C(But)CHC(Ph)N(R))Cl3) (R=SiMe3)t" Seiten 2637-2638

## Beschreibung

Gegenstand der vorliegenden Erfindung sind Übergangsmetallkomplexe der allgemeinen Formel I

LₘMXₙ I,

in der die Variablen die folgende Bedeutung haben:
- M: Titan, Zirkonium, Hafnium, Vanadium, Niob, Tantal oder ein Seltenerdmetall,
- X: Fluor, Chlor, Brom, Iod, Wasserstoff, c₁-c₁₀-Alkyl, C₆-C₁₅-Aryl oder OR¹,
- R¹: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
- m: 1 oder 2,
- n: für den Fall, daß M Titan, Zirkonium oder Hafnium bedeutet, eine Zahl 4-m, oder,
für den Fall, daß M Vanadium, Niob oder Tantal bedeutet, eine Zahl 5-m, oder,
für den Fall, daß M ein Seltenerdmetall bedeutet, eine Zahl 3-m, und
- L: ein Ligand der allgemeinen Formel II 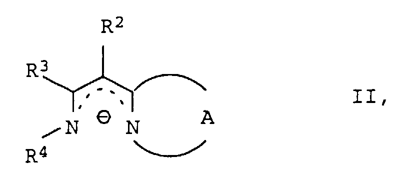 wobei
A ein Brückenglied, welches zusammen mit dem Stickstoff- und Kohlenstoffatom, an das es gebunden ist, einen fünf- oder sechsgliedrigen, gegebenenfalls substituierten, aromatischen Ring bildet, welcher noch zwei weitere Heteroatome aus der Gruppe Sauerstoff, Schwefel und Stickstoff enthalten kann und mit einem weiteren zwei-, drei-, oder vierkernigen iso- oder heteroaromatischen System anelliert sein kann,
R² Wasserstoff, C₁-C₁₀-Alkyl, C₆-C₁₅-Aryl, Tri-(C₁-C₁₀)alkylsilyl oder Tri-(C₆-C₁₅)arylsilyl,
R³ C₆-C₁₅-Aryl oder C₁-C₁₀-Alkylreste, welche kein Wasserstoff am α-C-Atom tragen und
R⁴ Wasserstoff, C₁-C₁₀-Alkyl, C₆-C₁₅-Aryl, Tri-(C₁-C₁₀)alkylsilyl oder Tri-(C₆-C₁₅)arylsilyl
bedeuten.

Weiterhin betrifft die Erfindung ein Verfahren zur Herstellung der Übergangsmetallkomplexe, β-Diketimine, deren Anionen als Liganden für die Übergangskomplexe dienen, die Verwendung der Übergangsmetallkomplexe als Katalysatoren zur Polymerisation von Olefinen, ein Verfahren zur Herstellung von Polymerisaten mit Hilfe dieser Übergangsmetallkomplexe, die Verwendung der Polymerisate zur Herstellung von Fasern, Folien und Formkörpern sowie solche Fasern, Folien und Formkörper selbst.

Übergangsmetallkomplexe von Elementen der 4. Nebengruppe des Periodensystems werden seit langem als Katalysatoren zur Olefinpolymerisation eingesetzt. Bekannt sind beispielsweise Zieglerkatalysatoren und Metallocenkatalysatoren (s. z.B. Ullmann's Encyclopedia of Industrial Chemistry, 5. Aufl., Vol. A21, S. 502-504 (1992)). Auch Übergangsmetallkomplexe mit anderen Ligandensystemen wurden als Katalysatoren verwendet wie Azaallyl-(WO 95/33776) und β-Diketiminatkomplexe (J. Organometall. Chem., 500, 203-217 (1995)). Die bekannten Katalysatorsysteme lassen jedoch bezüglich ihrer Produktspezifität, insbesondere hinsichtlich der Kettenlänge der Polymerisate, noch zu wünschen übrig.

Aufgabe der vorliegenden Erfindung war es daher, neue Übergangsmetallkomplexe zur Verfügung zu stellen, die sich als Katalysatoren zur Olefinpolymerisation eignen und die Nachteile der bekannten Katalysatoren überwinden.

Demgemäß wurden die eingangs genannten Übergangsmetallkomplexe gefunden.

Außerdem wurde ein Verfahren zur Herstellung der Übergangsmetallkomplexe, β-Diketimine, deren Anionen als Liganden für die Übergangskomplexe dienen, die Verwendung der Übergangsmetallkomplexe als Katalysatoren zur Polymerisation von Olefinen, ein Verfahren zur Herstellung von Polymerisaten mit Hilfe diesen Übergangsmetallkomplexe, die Verwendung der Polymerisate zur Herstellung von Fasern, Folien und Formkörpern sowie solche Fasern, Folien und Formkörper selbst gefunden.

Unter den Übergangsmetallen M in der allgemeinen Formel I sind die Elemente der 4. Nebengruppe des Periodensystems bevorzugt, besonders bevorzugt ist Zirkonium.

Als Liganden X sind besonders die Halogene Fluor, Chlor, Brom und Iod zu nennen, besonders bevorzugt ist Chlor. Unter den C₁-C₁₀-Alkylresten kommen besonders Methyl, Ethyl, Propyl und Butyl in Betracht. Bevorzugter C₆-C₁₅-Arylrest ist der Phenylrest.

Die Zahlen m und n ergänzen sich jeweils zur Wertigkeit des jeweiligen Übergangsmetallzentralatoms. Die Bedeutung von m ist bevorzugt 1, da Übergangsmetallkomplexe mit einem ß-Diketiminatliganden besonders gute katalytische Aktivität zeigen. Dies gilt insbesondere für die Metallkomplexe von Titan und Zirkonium. Bei der Herstellung der Übergangsmetallkomplexe wird jedoch meist erst ein Komplex mit m = 2 erhalten, der dann in einer Komproportionierungsreaktion mit MXₙ₊ₘ zum Komplex L₁MXₙ umgesetzt wird.

Als Reste R² im Liganden L der allgemeinen Formel II kommen beispielsweise die Alkylreste Methyl, Ethyl, n-Propyl, Isopropyl, n-Butyl, Isobutyl, sec-Butyl, tert-Butyl sowie die verschiedenen Isomeren von Pentyl, Hexyl, Heptyl, Octyl, Nonyl und Decyl in Betracht.

Weiterhin kommen als R² C₆-C₁₅-Arylreste, insbesondere unsubstituierte oder mit Alkylresten aus der oben genannten Gruppe substituierte Phenyl- oder Naphthylreste, in Betracht.

Als weitere Reste R² sind Wasserstoff, Triphenylsilyl und Trimethylsilyl zu nennen.

Als Reste R³ kommen insbesondere unsubstituierte oder mit Methyl, Ethyl oder Halogen substituierte Phenylreste in Betracht, besonders bevorzugt p-Methylphenyl und Pentafluorphenyl. Unter den C₁-C₁₀-Alkylresten, die kein Wasserstoffatom am α-C-Atom tragen, ist besonders tert-Butyl zu nennen.

Als Reste R⁴ kommen die gleichen Reste in Betracht, wie sie für R² genannt wurden, vorzugsweise Trialkylsilyl- oder Triarylsilylreste, besonders bevorzugt Trimethylsilyl.

Das Brückenglied A ergänzt die Gruppierung 〉C=N- zu einem fünf- oder sechsgliedrigen Ringsystem. Dieses Ringsystem kann noch zwei weitere Heteroatome tragen, so daß beispielsweise Ringsysteme aus der Pyridin-, Pyridazin-, Pyrimidin-, Pyrazin-, Triazin-, Pyrrol-, Pyrazol,- Thiazol- oder Oxazolreihe vorliegen. Diese Ringsysteme können noch mit einem weiteren zwei-, drei-oder vierkernigen iso- oder heteroaromatischen System anelliert sein, so daß beispielsweise Ringsysteme aus der Indol-, Indazol-, Chinolin-, Isochinolin- oder Chinazolinreihe vorliegen.

Vorzugsweise ergänzt das Brückenglied A die Gruppierung 〉C=N- zu einem Pyridin-, Chinolin- oder Isochinolinringsystem.

Bevorzugt sind Übergangsmetallkomplexe, in denen A ein Brückenglied der allgemeinen Formel III 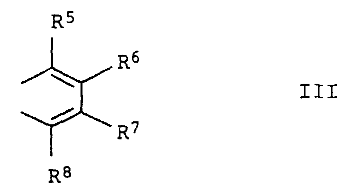 bedeutet, in der die Substituenten
- R⁵, R⁶, R⁷, R⁸: Wasserstoff, C₁-C₁₀-Alkyl, C₆-C₁₅-Aryl oder entsprechende über Sauerstoff, Schwefel, Stickstoff oder Phosphor gebundene Substituenten, Nitro oder Nitroso
bedeuten.

Die Substituenten R⁵, R⁶, R⁷ und R⁸ sind vorzugsweise Wasserstoff. Als Alkyl- und Arylreste kommen z.B. die unter R² genannten Reste in Betracht. Weiterhin kommen Substituenten in Betracht, bei denen Wasserstoff oder die oben genannten Alkyl- oder Arylreste über Sauerstoff, Schwefel, Stickstoff oder Phosphor gebunden sind wie Alkoxy, Alkylthio, Monoalkylamino, Dialkylamino, Dialkylphosphino, Aryloxy, Arylthio, Monoarylamino, Diarylamino oder Diarylphosphino.

Bevorzugt sind auch Übergangsmetallkomplexe, in denen A ein Brückenglied der allgemeinen Formel IV 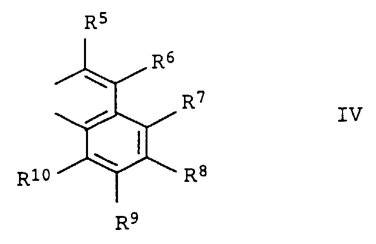 bedeutet, in der die Substituenten R⁵, R⁶, R⁷ und R⁸ die oben genannte Bedeutung und R⁹ und R¹⁰ ebenfalls diese Bedeutung haben.

Für die Substituenten R⁹ und R¹⁰ gelten die gleichen Bevorzugungen wie sie für die Reste R⁵ und R⁸ genannt wurden.

Zur Herstellung der erfindungsgemäßen Übergangsmetallkomplexe wurde ein Verfahren gefunden, welches dadurch gekennzeichnet ist, daß man eine Verbindung der allgemeinen Formel V 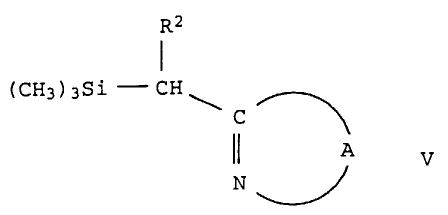 mit einer starken Base in das Anion Va 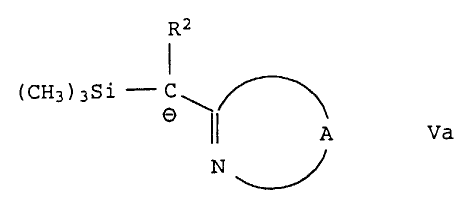 überführt, mit einem Nitril R³-CN zum Anion IIa 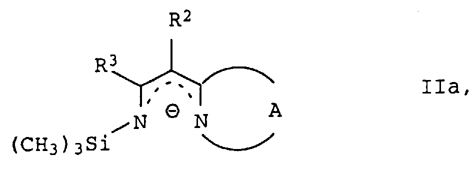 umsetzt, gewünschtenfalls die Schutzgruppe (CH₃)₃Si- durch Umsetzung mit einer Verbindung R⁴-Halogen ersetzt und das so erhaltene Anion II 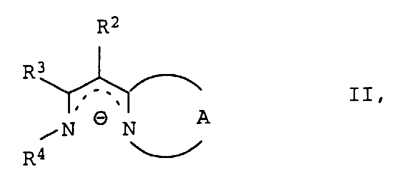 mit Übergangsmetallverbindungen der Formel MXₘ₊ₙ umsetzt.

Die Ausgangsverbindungen V können in bekannter Weise erhalten werden. Die Herstellung ist z.B. in J. Chem. Soc., Dalton Trans. 1990, 1161, beschrieben.

Als starke Base zur Überführung von V in das Anion Va kann z.B. Butyl-Lithium dienen. (Das Gegenion, in diesem Fall Li^{⊕}, wurde aus Gründen der Übersichtlichkeit im Formelschema nicht aufgeführt).

Die Reaktionsbedingungen sind an sich nicht kritisch.

Als besonders geeignet hat sich die Herstellung in einem Hexan-Diethylether-Gemisch als Lösungsmittel bei ca. 20°C unter einer Schutzgasatmosphäre aus Stickstoff oder Argon erwiesen.

Durch Protonierung, z.B. in Gegenwart von Wasser, lassen sich aus den Anionen II die β-Diketimine der allgemeinen Formel IIb 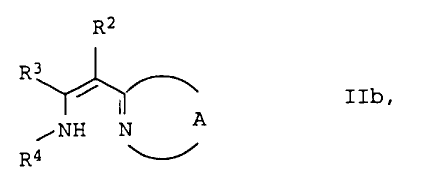 in der die Variablen die oben genannte Bedeutung haben, erhalten. Diese β-Diketimine sind lagerstabil und stellen wertvolle Zwischenprodukte zur Herstellung der erfindungsgemäßen Übergangsmetallkomplexe dar.

Die erfindungsgemäßen Übergangsmetallkomplexe finden Verwendung als Katalysatoren zur Polymerisation von Olefinen.

Bevorzugte polymerisierbare Olefine sind Ethylen, Propylen, But-1-en, Pent-1-en, Hex-1-en, Oct-1-en sowie Mischungen dieser Olefine.

Das erfindungsgemäße Verfahren zur Herstellung von Polymerisaten von C₂-C₁₀-Alk-1-enen bei Drücken von 0,5 bis 3000 bar und Temperaturen von -50 bis 300°C unter Verwendung eines Katalysatorsystems ist dadurch gekennzeichnet, daß das Katalysatorsystem als aktive Bestandteile
a) Übergangsmetallkomplexe gemäß der Formel I

   LₘMXₙ I,

   und
b₁) eine offenkettige oder cyclische Alumoxanverbindung der allgemeinen Formeln VI oder VII 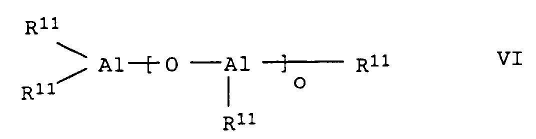 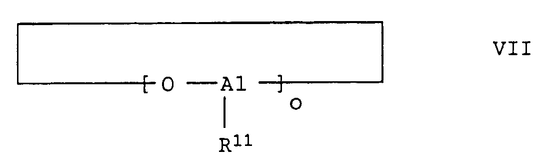 in der R¹¹ eine C₁-C₄-Alkylgruppe bedeutet und o für eine Zahl von 5 bis 30 steht
   und/oder
b₂) kationenbildende Verbindungen enthält.

Der Rest R¹¹ bedeutet bevorzugt Methyl oder Ethyl, o steht bevorzugt für eine Zahl von 10 bis 25.

Die Herstellung der oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die erfindungsgemäßen Übergangsmetallkomplexe und die oligomere Alumoxanverbindung in solchen Mengen zu verwenden, daß das atomare Verhältnis zwischen Aluminium aus der oligomeren Alumoxanverbindung und dem Übergangsmetall im Bereich von 10:1 bis 10⁶:1, insbesondere im Bereich von 10:1 bis 10⁴:1, liegt.

Geeignete kationenbildende Verbindungen sind insbesondere starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel VII

M¹X¹X²X³ VII

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VII, in denen X¹, X² und X³ gleich sind, vorzugsweise Tris(pentafluorphenyl)boran.

Als ionische Verbindungen mit lewissauren Kationen sind Verbindungen der allgemeinen Formel VIII

[(Y^{a+})Q₁Q₂...Q_{z}]^{d+} VIII

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an kationenbildenden Verbindungen beträgt bevorzugt 0,1 bis 10 Äquivalente, bezogen auf den Übergangsmetallkomplex I.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Bei der Herstellung der Polymerisate von C₂- bis C₁₀-Alk-1-enen kann auch ein geträgertes Katalysatorsystem eingesetzt werden. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace.

Unter Polymerisaten von C₂- bis C₁₀-Alk-1-enen sind Homo- oder Copolymerisate von C₂- bis C₁₀-Alk-1-enen, insbesondere von C₂- bis C₆-Alk-1-enen zu verstehen. Bevorzugt sind Homopolymerisate des Ethylens oder des Propylens und Copolymerisate von Ethylen und Propylen, Ethylen und But-1-en, Ethylen und Pent-1-en, Ethylen und Hex-1-en sowie Propylen und But-1-en, Propylen und Pent-1-en wie auch Propylen und Hex-1-en. Der Anteil an Comonomeren kann dabei bis zu 50 Gew.-%, insbesondere bis zu 30 Gew.-% betragen.

Das erfindungsgemäße Verfahren kann sowohl in Lösung, in einer Suspension, in der Gasphase oder aber als Substanzpolymerisation durchgeführt werden. Bevorzugt wird das Verfahren zur Herstellung der Polymerisate von C₂-C₁₀-Alk-1-enen in der Gasphase durchgeführt. Die Polymerisationsbedingungen sind an sich unkritisch; Drücke von 0,5 bis 3000 bar, bevorzugt von 1 bis 80 bar und Temperaturen von -50 bis +300°C, bevorzugt von 0 bis 150°C haben sich als geeignet erwiesen. Die Polymerisation kann in Anwesenheit von üblichen Reglern, beispielsweise Wasserstoff oder C₂-C₈-Alk-1-enen und in üblichen Polymerisationsreaktoren durchgeführt werden.

Bei einem bevorzugten Verfahren zur Herstellung von Homopolymerisaten von C₂- bis C₁₀-Alk-1-enen geht man so vor, daß die aktiven Bestandteile des Katalysatorsystems in Toluol bei Temperaturen im Bereich von 0 bis 140°C vorgelegt werden.

Hierzu wird dann über einen Zeitraum von 0,5 bis 12 Stunden das C₂- bis C₁₀-Alk-1-en bei einem Druck von 1 bis 60 bar aufgepreßt. Die Aufarbeitung der Polymerisate erfolgt dann nach üblichen Methoden.

Das erfindungsgemäße Verfahren zur Herstellung von Polymerisaten von C₂- bis C₁₀-Alk-1-enen zeichnet sich durch geringen verfahrenstechnischen Aufwand aus.

Die nach dem erfindungsgemäßen Verfahren hergestellten Polymerisate von C₂- bis C₁₀-Alk-1-enen weisen ein ausgewogenes Eigenschaftsprofil auf. Die Polymerisate zeigen insbesondere sehr hohe Molekulargewichte und eignen sich insbesondere zur Herstellung von Fasern, Folien und Formkörpern.

### Beispiele

### Beispiel 1

### Synthese von [Li{N(SiMe₃)C(Ph)C(H)(C₅H₄N-2)}]₂

[Li{CH(SiMe₃) (C₅H₄N-2)}]₂ wurde dargestellt, indem 5,13 g (31 mmol) CH₂(SiMe₃) (C₅H₄N-2) bei Zimmertemperatur zu einer Lösung von n-Butyl-Lithium (32 mmol) in 20 ml Hexan und 20 ml Diethylether gegeben wurden. Nach Rühren des Reaktionsgemisches für 30 min bei Zimmertemperatur wurde die Suspension mit 35 ml Diethylether verdünnt. Es wurden 3,3 ml (32 mmol) Benzonitril tropfenweise bei Zimmertemperatur dazugegeben. Das Reaktionsgemisch wurde für 16 h gerührt, dann wurden die flüchtigen Bestandteile im Vakuum entfernt. Der Rückstand wurde bei 50°C im Vakuum getrocknet. Kristalle wurden durch langsames Abkühlen einer heißen Hexanlösung (50 ml) auf 0°C erhalten.
Ausbeute: 2,89 g (34 %)

¹H NMR (360 MHz, C₆D₆): δ 8.05 (m, 1H, py), 790 (d, J=7.4 Hz, 2H, Ph), 7.29 (t, J=7.4, 2H, pH), 7.20 (d, J=7.2, 1H, py), 6.99 (t, J=7.8, 1H, pH), 6.73 (d, J=7.9 Hz, 1H, py), 6.41 (ps, t, 1H, py), 6.24 (s, 1H, CH), -0.02 (s, 9H, SiMe₃).
¹³C NMR (62.9 MHz, C₆D₆/C₆D₆): δ 165.3 (NCPh), 160.5, 148.5, 147.2, 137.3, 129.2, 128.2, 127.9, 124.1 und 117.6 (aryl C), 107.1 (CH), 2.5 (SiMe₃).

### Beispiel 2

### Synthese von [Li{N(SiMe₃)C(Ph)C(SiMe₃) (C₅H₄N-2)}]₂

[Li{C(SiMe₃)₂(C₅H₄N-2)}]₂ wurde dargestellt, indem 8,0 ml (7,4 g, 31 mmol) CH(SiMe₃)₂(C₅H₄N-2) bei Zimmertemperatur zu einer Lösung von n-Butyl-Lithium (32 mmol) in 20 ml Hexan und 50 ml Diethylether gegeben wurden. Das Reaktionsgemisch wurde für 1 h bei Zimmertemperatur gerührt. Es wurden 3,2 ml (31 mmol) Benzonitril tropfenweise bei Zimmertemperatur dazugegeben. Das Reaktionsgemisch wurde für 15 h gerührt, dann wurden die flüchtigen Bestandteile im Vakuum entfernt. Der Rückstand wurde in 50 ml Hexan suspendiert, auf -30°C gekühlt und dann auf einer Fritte gesammelt. Das Produkt wurde mit 30 ml Pentan gewaschen.
Ausbeute: 7,37 g (68 %)

¹H NMR (250 MHz, C₄D₈O): δ 8.13 (ddd, J=5.2, 2.0, 0.9 Hz, 1H, py), 7.38 (ddd, J=8.3, 7.1, 2.0 Hz, 1H, py), 7.33-7.29 (m, 2H, Ph), 7.18-7.15 (m, Ph), 7.11 (dt, J=8.3, 1.0 Hz, 1H, py), 6.68 (ddd, J=7.1, 5.2, 1.2 Hz, 1H, py), -0.36 (s, 9H, SiMe₃), -0.41 (s, 9H, SiMe₃).
¹³C NMR (62.9 MHz, C₄D₈O): δ 174.2 (NCPh), 167.0, 151.5, 146.4, 135.0, 130.8, 127.6, 127.2, 125.8 und 115.7 (aryl C), 99.0 (CSiMe₃), 3.8 (SiMe₃).

### Beispiel 3

### Synthese von [Li{N(SiMe₃)C(Ph)C(SiMe₃) (c₉H₆N-2)}]₂

CH₂(SiMe₃) (C₉H₆N-2) (0,9 ml, 4,1 mmol) wurden bei 0°c tropfenweise zu einer Lösung von n-Butyl-Lithium (2,5 ml, 4,0 mmol) in Hexan, verdünnt mit 5 ml Diethylether gegeben. Die Lösung wurde für 30 min bei Zimmertemperatur gerührt; dann wurden 0,5 ml (4,0 mmol) SiMe₃Cl dazugegeben. Nach 15 stündigem Rühren bei Zimmertemperatur wurde die Suspension filtriert und mit 2,4 ml (3,8 mmol) n-Butyl-Lithium bei 0°C versetzt. Die Lösung wurde für 15 min bei Zimmertemperatur gerührt, dann wurden 0,4 ml (3,9 mmol) Benzonitril bei 0°C zugegeben. Nach dem das Reaktionsgemisch für 15 h gerührt wurde, wurden die flüchtigen Bestandteile im Vakuum entfernt und der Rückstand für 30 min bei 50°C im Vakuum getrocknet. Der Rückstand wurde zweimal mit je 10 ml Hexan gewaschen.
Ausbeute: 1,02 g (64 %)

¹H NMR (250 MHz, C₄D₈O): δ 7.80 (t, J=9.0 Hz, 2H, qui), 7.60 (dd, J=7.9, 1.2 Hz, 1H, Ph), 7.45 (m, 1H,Ph), 7.34 (m, 3H, aryl H), 7.20 (m, 4H, aryl H), -0.32 (s, 9H, SiMe₃), -0.38 (s, 9H, SiMe₃) ¹³C NMR (62.9 MHz, C₄D₈O): δ 174.8, (NCPh), 167.7, 151.2, 148.6, 133.7, 130.9, 128.5, 128.0, 127.7, 127.5, 127.4, 126.8, 125.9 und 123.2 (aryl C), 100.6 (CSiMe₃), 4.1 (SiMe₃), 3.8 (SiMe₃).

### Beispiel 4

### Synthese von Zr{N(SiMe₃)C(Ph)C(H)(C₅H₄N-2)}₂Cl₂

Eine Lösung von 2,38 g (4,34 mmol) der Beispielverbindung 1 in 12 ml THF wurde zu einer Lösung von 0,99 g (4,25 mmol) ZrCl₄ in 60 ml THF bei 0°C gegeben. Das Reaktionsgemisch ließ man auf Zimmertemperatur erwärmen, dann 15 h rühren und anschließend 1,5 h refluxieren. Die flüchtigen Bestandteile wurden im Vakuum entfernt und der Rückstand mit 10 ml Hexan, 50 ml Diethylether und Dichlormethan (2x25 ml) extrahiert. Die vereinigten Extrakte wurden auf 50 ml konzentriert und anschließend auf -30°C gekühlt. Die so erhaltenen Kristalle wurden mit 5 ml Hexan gewaschen. Ausbeute: 1,58 g (53 %).

¹H NMR (360 MHz, C₆D₆): δ 9.04 (d, J=6.0 Hz, 2H, py), 7.66 (d, J=7.2 Hz, 4H, Ph), 7.1-7.0 (m, 6H, Ph), 6.77 (t, J=7.7 Hz, 2H, py), 6.35 (d, J=7.9 Hz, 2H, py), 6.30 (t, J=6.6, 2H, py), 6.05 (s, 2H, CH), 0.21 (s, 18H, SiMe₃).
¹³ C NMR (62.9 MHz, C₆D₆): δ 155.0 (NCPh), 154.2, 149.8, 141.2, 138.0, 129.2, 128.8, 127.9, 123.3 und 120.2 (aryl C), 111.2 (CH), 3.1 (SiMe₃).

### Beispiel 5

### Synthese von Zr{N(SiMe₃)C(Ph)C(SiMe₃)(C₅H₄N-2)}₂Cl₂

Zu einer Lösung von 1,33 g (5,71 mmol) ZrCl₄ in 60 ml Diethylether wurden 3,86 g (5,70 mmol) der Beispielverbindung 2 gegeben. Das Reaktionsgemisch wurde für 16 h gerührt, dann wurden die flüchtigen Bestandteile im Vakuum entfernt. Der Rückstand wurde mit 2x50 ml Dichlormethan extrahiert und zweimal abfiltriert. Die flüchtigen Bestandteile wurden im Vakuum entfernt und der Rückstand aus 50 ml Toluol bei -30°C umkristallisiert.
Ausbeute: 1,32 g (1,57 mmol).
Durch Konzentration der Mutterlauge wurden weitere 1,13 g Produkt erhalten.
Gesamtausbeute: 2,45 g (54 %).

¹H NMR (360 MHz, C₆D₆): δ 8.59-8.58 (m, 2H, py), 7.68 (D, J=5.7 Hz, 2H, Ph), 7.63 (d, J=6.6 Hz, 2H, Ph), 7.28 (d, J=8.1 Hz, 2H, py), 7.12 (m, 6H, Ph), 6.87 (td, J=7.7 Hz, 1.7 Hz, 2H, py), 6.00 (t, J=6.0 Hz, 2H, py), 0.03 (s, 18H, SiMe₃), 0.01 (s, 18H, SiMe₃). ¹³C NMR (62.9 Hz, C₆D₆): δ 165.0 (NCPh), 162.9, 149.8, 143.4, 137.9, 130.4, 129.3, 128.6, 128.4, 128.3, 127.9, 127.0 und 125.8 (aryl C), 118.6 und 118.3 (CSiMe₃), 4.3 und 2.3 (SiMe₃).

### Beispiel 6

### Synthese von Zr{N(SiMe₃)C(Ph)C(SiMe₃)(2-C₉H₆N)}₂Cl₂

Zu einer Suspension von 0,5 g (2,2 mmol) ZrCl₄ in 50 ml Diethylether wurden 1,7 g (4,3 mmol) der Beispielverbindung 3 gegeben. Das Reaktionsgemisch wurde für 3 h gerührt, dann wurden die flüchtigen Bestandteile im Vakuum entfernt. Der Rückstand wurde mit 45 ml warmem Toluol extrahiert und abfiltriert. Das Filtrat wurde im Vakuum bis zur Trockene eingeengt und der Rückstand mit 25 ml Hexan extrahiert. Der Feststoff wurde aus einem Gemisch von Dichlormethan und Diethylether (1:1, v:v) umkristallisiert. Ausbeute: 0,78 g (37 %).

¹H NMR (360 MHz, C₆D₆): δ 8.82 (d, J=8.3 Hz, 2H, qui), 8.28 (d, J=8.4 Hz, 2H, qui), 7.80 (d, =6.9 Hz, 2H, Ph), 7.54 (d, J=8.6 Hz, 2H, Ph), 7.26-7.17 (m, 8H, Ph und qui), 6.77-6.75 (m, 2H, qui, 6.60-6.57 (m, 4H, qui), 0.09 (s, 18H, SiMe₃), 0.08 (s, 18H, SiMe₃).
¹³C NMR (62.9 MHz, C₆D₆/C₆H₆): δ 166.5 (NCPh), 163.5, 145.8, 142.8, 138.7, 135.1, 131.5, 130.7, 129.8, 127.3, 126.9, 126.5, 124.9, 119.5 und 118.4 (aryl C), 104.9 (CSiMe₃), 3.9 und 2.6 (SiMe₃).

### Beispiel 7

### Synthese von Zr{N(SiMe₃)C(Ph)C(SiMe₃)(2-C₉H₆N)}Cl₃

Zu einer Suspension von 0,63 g (2,7 mmol) ZrCl₄ in 35 ml Toluol wurden 2,16 g (2,57 mmol) der Beispielverbindung 5 gegeben. Das Reaktionsgemisch wurde für 16 h gerührt, dann wurden die flüchtigen Bestandteile im Vakuum entfernt. Der Rückstand wurde mit 20 ml Hexan extrahiert.
Ausbeute: 1,73 g (3,22 mmol), 63 %).

¹H NMR (360 MHz, CD₂Cl₂): δ 8.88 (d, J=5.4 Hz, 1H, py), 8.36 (t, J=8.1 Hz, 1H, py), 7.29 (d, J=8.1 Hz, 1H), 7.73-7.42 (6H, Ph und py), -0.09 (s, 9H, SiMe₃), -0.28 (s, 9H, SiMe₃).

### Beispiel 8

### Synthese von Zr{N(SiMe₃)C(Ph)C(SiMe₃)(2-C₉H₆N)}Cl₃

Zu einer Suspension von 0,39 g (1,67 mmol) ZrCl₄ in 25 ml Dichlormethan wurden 1,53 g (1,63 mmol) der Beispielverbindung 6 gegeben. Das Reaktionsgemisch wurde für 16 h gerührt, dann wurde abfiltriert und das Filtrat auf 10 ml aufkonzentriert. Kühlen der Lösung auf -30°C ergab 0,81 g Kristalle. Aus der Mutterlauge konnte weitere Substanz gewonnen werden.
Gesamtausbeute: 1,10 g (57 %).

1H NMR (360 MHz, CD₂Cl₂): δ 8.80 (d, J=8.7 Hz, 1H, qui), 8.75 (d, J=8.4 Hz, 1H, qui), 8.0-7.5 (14H, Ph und qui), 7.40 (t, J=7.5 Hz, 1H), 7.25 (t, J=7.7 Hz, 1H), 6.95 (t, J=7.3 Hz, 1H), 6.86 (t, J=7.6 Hz, 1H), 6.65 (d, J=8.4 Hz, 1H, qui), 6.34 (d, J=8.6 Hz, 1H qui), 0.26 (s, 9H, SiMe₃), -0.10 (s, 9H, SiMe₃), -0.20 (s, 9H, SiMe₃), -0.31 (s, 9H, SiMe₃).

### Beispiel 9

### Ethylenpolymerisation

In einem typischen Experiment wurden 31 mg (0,053 mmol) der Beispielverbindung 8 mit 3,5 ml (5,4 mmol Al) einer 10 gew.-%igen Lösung von Methylalumoxan (MAO) in Toluol bei Zimmertemperatur umgesetzt. Die Lösung wurde mit 31,5 ml Toluol verdünnt, entgast und dann bei Zimmertemperatur unter einen Druck von 1,5 bar Ethylen gesetzt. Nach 30 min wurde die Polymerisation durch Zugabe von methanolischer HCl abgebrochen. Das Polymer wurde isoliert, mit 1 M HCl-Lösung, Wasser und Methanol gewaschen und dann bei 80°C bis zur Gewichtskonstanz getrocknet. Weitere analog durchgeführte Beispiele sind in Tabelle 1 aufgeführt.

**Tabelle 1:**

| Ethylenpolymerisation: | | | | | | |
|---|---|---|---|---|---|---|
| Katalysator gemäß Beispiel | Einwaage Katalysator (mg) | MAO-Lösung (ml) | zugesetztes Toluol (ml) | Reaktionszeit (min) | Ausbeute an PE (mg) | η-Wert (dl/g) |
| 4 | 50 | 5 | 20 | 60 | 10 | 11.2 |
| 7 | 41 | 5 | 45 | 25 | 620 | 9.1 |
| 8 | 31 | 3.5 | 32 | 25 | 150 | 7.3 |
| Die η-Werte wurden nach ISO 1628-3 bestimmt. | | | | | | |

## Patentansprüche

1. Übergangsmetallkomplexe der allgemeinen Formel I
LₘMXₙ I,
in der die Variablen die folgende Bedeutung haben:
M Titan, Zirkonium, Hafnium, Vanadium, Niob, Tantal oder ein Seltenerdmetall,
X Fluor, Chlor, Brom, Iod, Wasserstoff, C₁-C₁₀-Alkyl, C₆-C₁₅-Aryl oder OR¹,
R¹ C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest,
m 1 oder 2,
n für den Fall, daß M Titan, Zirkonium oder Hafnium bedeutet, eine Zahl 4-m, oder,
für den Fall, daß M Vanadium, Niob oder Tantal bedeutet, eine Zahl 5-m, oder,
für den Fall, daß M ein Seltenerdmetall bedeutet, eine Zahl 3-m, und
L ein Ligand der allgemeinen Formel II 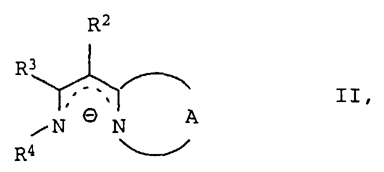 wobei
A ein Brückenglied, welches zusammen mit dem Stickstoff-und Kohlenstoffatom, an das es gebunden ist, einen fünf-oder sechsgliedrigen, gegebenenfalls substituierten, aromatischen Ring bildet, welcher noch zwei weitere Hetero-atome aus der Gruppe Sauerstoff, Schwefel und Stickstoff enthalten kann und mit einem weiteren zwei-, drei- oder vierkernigen iso- oder heteroaromatischen System anelliert sein kann,
R² Wasserstoff, C₁-C₁₀-Alkyl, C₆-C₁₅-Aryl, Tri-(C₁-C₁₀)alkylsilyl oder Tri-(C₆-C₁₅)arylsilyl,
R³ C₆-C₁₅-Aryl-, C₆-C₁₅-Fluoraryl-, C₁-C₁₀-Alkyl- oder C₁-C₁₀-Fluoralkylreste, welche kein Wasserstoff am α-C-Atom tragen und
R⁴ Wasserstoff, C₁-C₁₀-Alkyl, C₆-C₁₅-Aryl, Tri-(C₁-C₁₀)alkylsilyl oder Tri-(C₆-C₁₅)arylsilyl
bedeuten.

2. Übergangsmetallkomplexe nach Anspruch 1, in denen A ein Brückenglied der allgemeinen Formel III 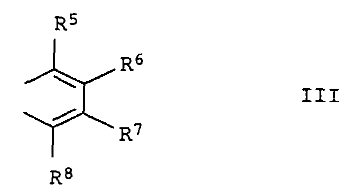 bedeutet, in der die Substituenten
R⁵, R⁶, R⁷, R⁸ Wasserstoff, C₁-C₁₀-Alkyl, C₆-C₁₅-Aryl oder entsprechende über Sauerstoff, Schwefel, Stickstoff oder Phosphor gebundene Substituenten, Nitro oder Nitroso,
bedeuten.

3. Übergangsmetallkomplexe nach Anspruch 1, in denen A ein Brückenglied der allgemeinen Formel IV 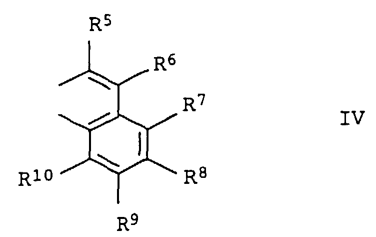 bedeutet, in der die Substituenten R⁵, R⁶, R⁷ und R⁸ die oben genannte Bedeutung und R⁹ und R¹⁰ ebenfalls diese Bedeutung haben.

4. Verfahren zur Herstellung der Übergangsmetallkomplexe gemäß Anspruch 1, dadurch gekennzeichnet, daß man eine Verbindung der allgemeinen Formel V 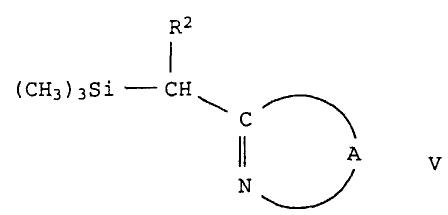 mit einer starken Base in das Anion Va 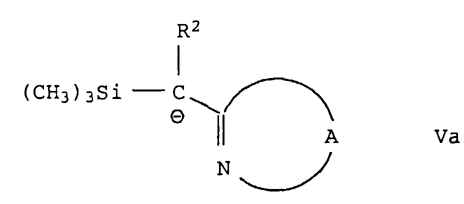 überführt, mit einem Nitril R³-CN zum Anion IIa 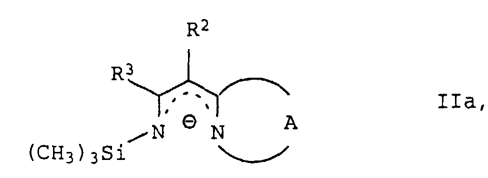 umsetzt, gewünschtenfalls die Schutzgruppe (CH₃)₃Si- durch Umsetzung mit einer Verbindung R⁴-Halogen ersetzt und das so erhaltene Anion II 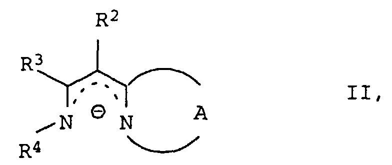 mit Übergangsmetallverbindungen der Formel MXₘ₊ₙ umsetzt.

5. β-Diketimine der allgemeinen Formel IIb 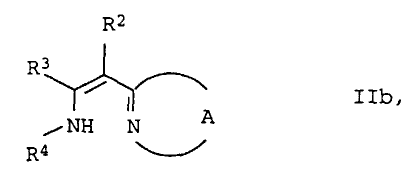 in der die Variablen die oben genannte Bedeutung haben.

6. Verwendung von Übergangsmetallkomplexen gemäß den Ansprüchen 1 bis 4 als Katalysatoren zur Polymerisation von Olefinen.

7. Verfahren zur Herstellung von Polymerisaten von C₂-C₁₀-Alk-1-enen bei Drücken von 0,5 bis 3000 bar und Temperaturen von -50 bis 300°C unter Verwendung eines Katalysatorsystems, dadurch gekennzeichnet, daß das Katalysatorsystem als aktive Bestandteile
a) Übergangsmetallkomplexe gemäß den Ansprüchen 1 bis 3
und
b₁) eine offenkettige oder cyclische Alumoxanverbindung der allgemeinen Formeln VI oder VII 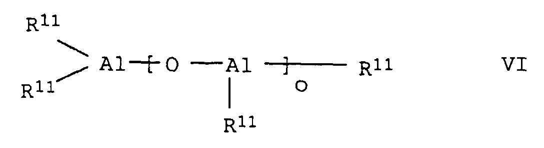 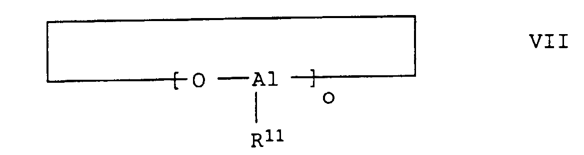 in der R¹¹ eine C₁-C₄-Alkylgruppe bedeutet und o für eine Zahl von 5 bis 30 steht
und/oder
b₂) kationenbildende Verbindungen enthält.

8. Verwendung der gemäß Anspruch 7 hergestellten Polymerisate von C₂-C₁₀-Alk-1-enen zur Herstellung von Fasern, Folien und Formkörpern.

9. Fasern, Folien und Formkörper, erhältlich aus den gemäß Anspruch 7 hergestellten Polymerisaten als wesentliche Komponente.

## Claims

1. A transition metal complex of the general formula I
LₘMXₙ I,
where the variables have the following meanings:
M is titanium, zirconium, hafnium, vanadium, niobium, tantalum or a rare earth metal,
X is fluorine, chlorine, bromine, iodine, hydrogen, C₁-C₁₀-alkyl, C₆-C₁₅-aryl or OR¹,
R¹ is C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
m is 1 or 2,
n is 4-m when M is titanium, zirconium or hafnium, or is 5-m when M is vanadium, niobium or tantalum, or is 3-m when M is a rare earth metal, and
L is a ligand of the general formula II 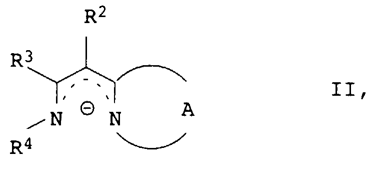 where
A is a bridge which together with the nitrogen and carbon atoms to which it is connected forms a five-membered or six-membered, unsubstituted or substituted aromatic ring which can also contain two further heteroatoms selected from the group consisting of oxygen, sulfur and nitrogen and can be fused to a further isoaromatic or heteroaromatic system having two, three or four rings,
R² is hydrogen, C₁-C₁₀-alkyl, C₆-C₁₅-aryl, tri-(C₁-C₁₀)alkylsilyl or tri-(C₆-C₁₅)arylsilyl,
R³ is a C₆-C₁₅-aryl-, C₆-C₁₅-fluoroaryl-, C₁-C₁₀-alkyl or C₁-C₁₀-fluoroalkyl radical which bears no hydrogen on the α-carbon atom and
R⁴ is hydrogen, C₁-C₁₀-alkyl, C₆-C₁₅-aryl, tri-(C₁-C₁₀)alkylsilyl or tri-(C₆-C₁₅)arylsilyl.

2. A transition metal complex as claimed in claim 1 in which A is a bridge of the general formula III 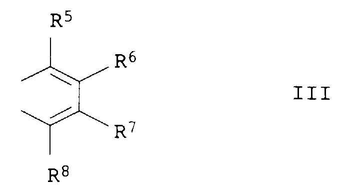 where the substituents
R⁵, R⁶, R⁷, R⁸ are hydrogen, C₁-C₁₀-alkyl, C₆-C₁₅-aryl or corresponding substituents bonded via oxygen, sulfur, nitrogen or phosphorus, nitro or nitroso.

3. A transition metal complex as claimed in claim 1 in which A is a bridge of the general formula IV 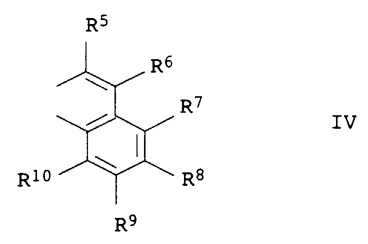 where the substituents R⁵, R⁶, R⁷ and R⁸ are as defined above and R⁹ and R¹⁰ likewise have the same meanings.

4. A process for preparing a transition metal complex as claimed in claim 1, which comprises converting a compound of the general formula V 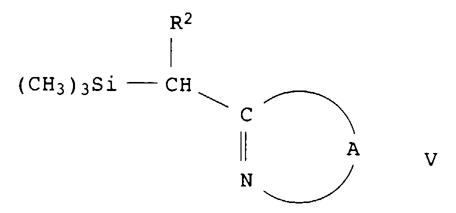 by means of a strong base into the anion Va 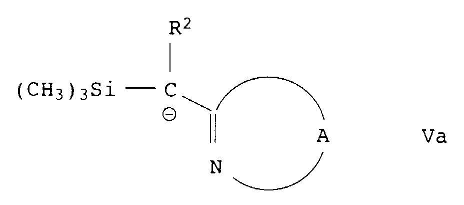 reacting this with a nitrile R³-CN to give the anion IIa 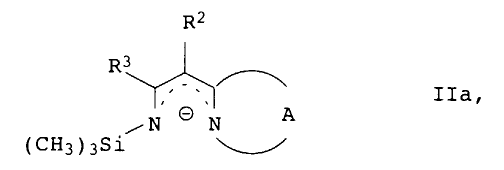 if desired replacing the protective group (CH₃)₃Si- by reaction with a compound R⁴-halogen and reacting the resulting anion II 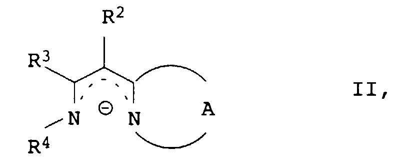 with a transition metal compound of the formula MXₘ₊ₙ.

5. A β-diketimine of the general formula IIb 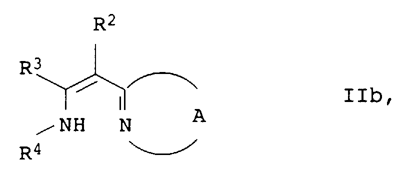 where the variables are as defined above.

6. Use of transition metal complexes as claimed in any of claims 1 to 4 as catalysts for polymerizing olefins.

7. A process for preparing polymers of C₂-C₁₀-alk-1-enes at pressures of from 0.5 to 3000 bar and at from -50 to 300°C using a catalyst system, wherein the catalyst system comprises as active constituents
a) transition metal complexes as claimed in claims 1 to 3
and
b₁) an open-chain or cyclic aluminoxane compound of the general formula VI or VII 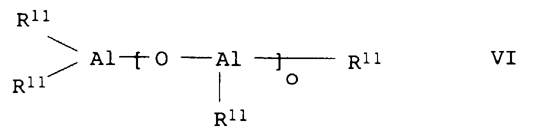 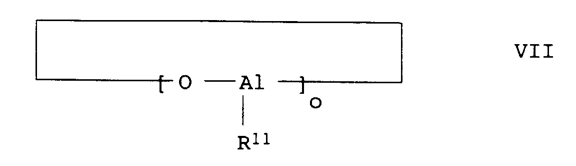 where R¹¹ is C₁-C₄-alkyl and o is from 5 to 30
and/or
b₂) cation-forming compounds.

8. Use of the polymers of C₂-C₁₀-alk-1-enes prepared as claimed in claim 7 for producing fibers, films and moldings.

9. Fibers, films and moldings obtainable from the polymers prepared as claimed in claim 7 as significant components.

## Revendications

1. Complexes de métaux de transition de formule générale I
LₘMXₙ I,
dans laquelle les symboles ont les significations suivantes :
M représente le titane, le zirconium, le hafnium, le vanadium, le niobium, le tantale ou un métal des terres rares,
X représente le fluor, le chlore, le brome, l'iode, l'hydrogène, un groupe alkyle en C1-C10, aryle en C6-C15 ou OR¹,
R¹ représente un groupe alkyle en C1-C10, aryle en C6-C15, alkylaryle, arylalkyle, fluoralkyle ou fluoraryle contenant chacun un à dix atomes de carbone dans la partie alkyle et six à vingt atomes de carbone dans la partie aryle,
m est égal à 1 ou 2,
n est égal à 4-m lorsque M représente le titane, le zirconium ou le hafnium, ou bien il est égal à 5-m lorsque M représente le vanadium, le niobium ou le tantale, ou bien il est égal à 3-m lorsque M représente un métal des terres rares et
L représente un ligand de formule générale II 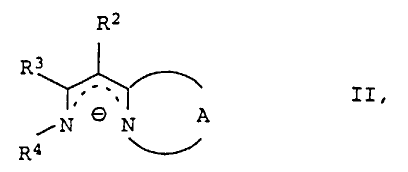 dans laquelle
A représente un pont qui, avec l'atome d'azote et l'atome de carbone auxquels il est relié, forme un cycle aromatique à cinq ou six chaînons éventuellement substitué et qui peut encore contenir deux autres hétéroatomes choisis parmi l'oxygène, le soufre et l'azote qui peut être condensé avec un autre système iso- ou hétéro-aromatique di-, tri- ou tétra-cyclique,
R² représente l'hydrogène, un groupe alkyle en C1-C10, aryle en C6-C15, tri-(alkyle en C1-C10)silyle ou tri-(aryle en C6-C15)silyle,
R³ représente un groupe aryle en C6-C15, fluoraryle en C6-C15, alkyle en C1-C10 ou fluoralkyle en C1-C10 qui ne porte pas d'hydrogène sur l'atome de carbone alpha et
R⁴ représente l'hydrogène, un groupe alkyle en C1-C10, aryle en C6-C15, tri-(alkyle en C1-C10)silyle ou tri-(aryle en C6-C15)silyle.

2. Complexes de métaux de transition selon la revendication 1 pour lesquels A représente un pont de formule générale III 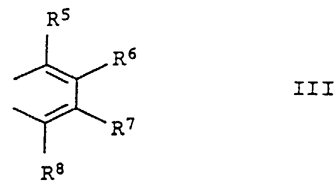 dans laquelle les symboles
R⁵, R⁶, R⁷, R⁸ représentent l'hydrogène, des groupes alkyle en C1-C10, aryle en C6-C15 ou les substituants correspondants reliés par l'intermédiaire de l'oxygène, du soufre, de l'azote ou du phosphore, des groupes nitro ou nitroso.

3. Complexes de métaux de transition selon la revendication 1, pour lesquels A représente un pont de formule générale IV 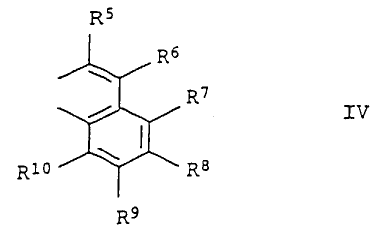 dans laquelle les symboles R⁵, R⁶, R⁷ et R⁸ ont les significations indiquées ci-dessus et R⁹ et R¹⁰ ont les mêmes significations.

4. Procédé de préparation des complexes des métaux de transition selon la revendication 1, caractérisé par le fait que l'on convertit un composé de formule générale V 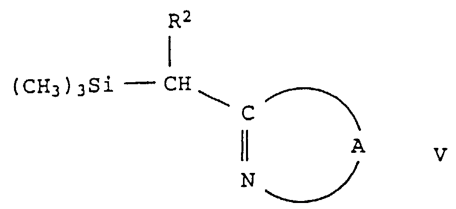 à l'aide d'une base forte, en l'anion Va 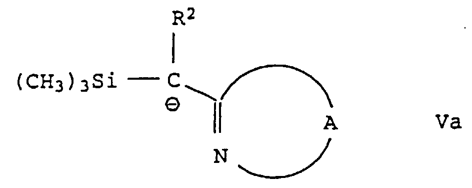 qu'on fait réagir avec un nitrile R³-CN, ce qui donne l'anion IIa 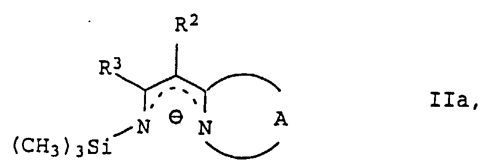 dans lequel le cas échéant on remplace le groupe protecteur (CH₃)₃Si-par réaction avec un composé R⁴-halogène, ce qui donne l'anion II 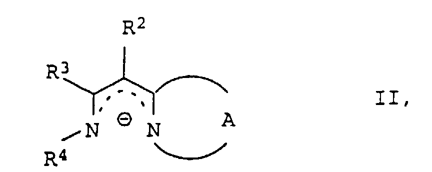 qu'on fait réagir avec des dérivés de métaux de transition de formule MXₘ₊ₙ.

5. Bêta-dicétimines de formule générale IIb 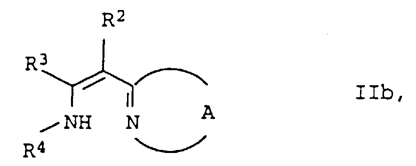 dans laquelle les symboles ont les significations indiquées ci-dessus.

6. Utilisation des complexes de métaux de transition des revendications 1 à 4 en tant que catalyseurs de la polymérisation des oléfines.

7. Procédé de préparation de polymères d'alcènes-1 en C2-C10 à des pressions de 0,5 à 3000 bar et des températures de -50 à +300°C avec utilisation d'un système catalyseur, caractérisé par le fait que le système catalyseur contient en tant que constituants actif
a) des complexes de métaux de transition selon les revendications 1 à 3 et
b₁) un aluminoxane cyclique ou acyclique de formule générale VI ou VII 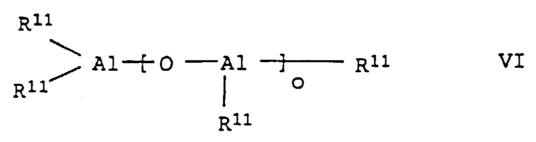 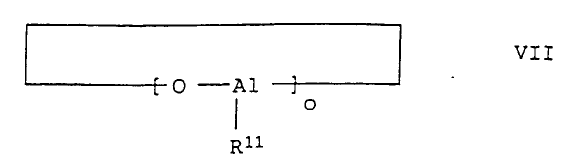 dans lesquelles R¹¹ représente un groupe alkyle en C1-C4 et o est un nombre allant de 5 à 30,
et/ou
b₂) des composés formant des cations.

8. Utilisation des polymères d'alcènes-1 en C2-C10 préparés selon la revendication 7 pour la fabrication de fibres, de feuilles et d'objets moulés.

9. Fibres, feuilles et objets moulés obtenus à partir des polymères préparés selon la revendication 7 en tant que composants essentiels.
